## Europäisches Patentamt
## European Patent Office
## Office européen des brevets

(19)

(11) Publication number: **0 201 118 B1**

(12) # EUROPEAN PATENT SPECIFICATION

(45) Date of publication of the patent specification: 24.10.90

(51) Int. Cl.⁵: **G01N 15/08, G01N 33/24**

(21) Application number: 86200638.4

(22) Date of filing: 15.04.86

(54) Method and apparatus for determining saturation and permeability of a rock sample using mercury capillary pressure curves.

(30) Priority: 26.04.85 US 727462

(43) Date of publication of application: 17.12.86 Bulletin 86/46

(45) Publication of the grant of the patent: 24.10.90 Bulletin 90/43

(84) Designated Contracting States:
DE FR GB IT NL

(56) References cited:
EP-A- 0 070 404
FR-A- 1 393 348
GB-A- 1 363 663
GB-A- 2 016 709
GB-A- 2 127 559
US-A- 4 211 106
US-A- 4 566 311

ZEITSCHRIFT FÜR PHYSIKALISCHE CHEMIE NEUE FOLGE, vol. 99, 1976, pages 245-256, Wiesbaden; K. UNGER et al.: "Hochdruck-Quecksilberporosimeter zur Bestimmung der Porenstruktur poröser Adsorbentien im Druckbereich bis 6000 Bar"

(73) Proprietor: SHELL INTERNATIONALE RESEARCH MAATSCHAPPIJ B.V., Carel van Bylandtlaan 30, NL-2596 HR Den Haag(NL)

(72) Inventor: Yuan, Herbert Hi-Hwa, 6202 Glenhill Street, Houston Texas 77025(US)
Inventor: Swanson, Benjamin Frithiof, 2200 South Gessner, No 709, Katy Texas(US)
Inventor: Stapleton, Robert Gene, 10122 Bessemer Street, Houston Texas 77034(US)

(74) Representative: Aalbers, Onno et al, P.O. Box 302, NL-2501 CH The Hague(NL)

## Description

The present invention relates to a method and apparatus for determining the characteristics of reservoir rocks and particularly, the characteristics of core samples that are removed from reservoir rocks.

One method that has been used for determining the characteristics of reservoir rocks is the measurement of capillary pressure. In particular, the mercury pressure response of the reservoir rock has been measured from which estimates have been made of the permeability of the rock as well as the pore volume.

One mercury capillary pressure method and apparatus is described in US patent specification 2, 604, 779. In this method the rock sample or core is placed in a closed vessel, the vessel is evacuated and then partially filled with mercury to cover the core. Mercury is then forced into the vessel at a constant rate while plotting the volume of mercury versus the pressure in the vessel. This provides a plot of the mercury capillary pressure versus volume of the core from which various core characteristics may be determined. For example, total pore volume and an indication of the permeability of the core can be determined.

In an article appearing in the Journal of Geophysical Research, Volume 71, No. 12, June 15, 1966, at pp. 2911, entitled "Flow of Fluids Through Porous Mediums", there is described experiments with air/water interfaces moving through simple synthesized permeable specimens. The authors observed that the interface did not move continuously through the synthesized sample, but rather in a non-continuous manner from pore to pore. The abrupt movements of the interface resulted in pressure drops in the pressure measured in the sample holder.

While the authors observed the non-continuous manner in which the interface moved through the synthetic permeable specimen, they did not utilize actual rock samples. Furthermore, they relied upon air/water interfaces. For the results to be useful the interface must be conventional water/oil interface that occurs in reservoir rocks or mercury/air interface. Further, the pores that occur in reservoir rocks are smaller than those present in the authors, synthetic sample by a factor of at least 10 to 100. The equipment and procedures used by the authors would be incapable of measuring the pressure and volume changes occurring in an actual rock sample.

Further, GB-A 2 016 709 discloses a method of determining pore volume distribution of a powder by mercury intrusion. However, this technique is not very suitable for rock samples.

It is therefore an object of the invention to provide a method and apparatus suitable for measuring characteristics of rock samples in an easy manner.

The invention therefore provides a method for determining characteristics of a porous body, comprising the steps of:

confining a portion of said body in a closed zone;

evacuating said zone and pore spaces of said body to a high vacuum;

admitting a fluid into said zone to a level above said body to completely immerse said body in said fluid and fill said zone with said fluid, characterized by the steps of:

continuously injecting additional fluid into said zone at a preselected rate;

substantially continuously noting pressure changes of said fluid in said zone and the volume of fluid injected into said zone;

determining subisons and risons from said noted pressure changes and injected volumes, and

determining said characteristics of said body from said determined subisons and risons.

The invention also provides an apparatus for determining characteristics of a porous body comprising:

a sample holder formed from two cup-shaped members detachably secured together to create a hollow holder for containing in said holder, said body, with the mating surfaces of said two cup-shaped members having ground surfaces to form a leak-tight seal therebetween;

a positive displacement pump interconnected with said sample holder for injecting a fluid into said holder;

a drive means interconnected with said pump to provide a preselected flow rate into said sample holder;

a first means interconnected with said pump for determining the volume of fluid injected into said holder by said pump, characterized by:

a second means interconnected with said sample holder, for measuring the pressure therein, and a processing means for analyzing data from said first and second means to determine said characteristics.

The present invention is based on the discovery that by using extremely slow injection rates and making accurate measurements of both the volume and pressure of the displacing fluid that is injected, one can detect the pressure at which the displacing fluid breaks through to each subison pore system in the rock sample. The term "subison" will be explained below. The invention utilizes these measurements of the volumes of subison pore systems to yield the saturation of the non-wetting phase in the rock sample and the residual saturation from a given initial saturation. The data also is utilized to predict the absolute permeability of the sample as well as the value of Archie's exponent m and the formation resistivity factor F used in Archie's equations that have, since 1942, been used to calculate oil and/or water saturations in clean sands. Archie's original empirical relations were modified by Waxman-Smits equations described in "Electrical Conductivity in Oil-Bearing Shaly Sands", Waxman-Smits, 1968 SPE Journal, June, pp. 107-122. Both the Archie and the Waxman-Smits equations require determination of the formation resistivity factor F and Archie's exponent m.

The apparatus of the present invention is an improvement over that previously used in that it permits very slow controlled injection rates in combination with means for accurately measuring both the injected volumes and pressures. Further, the sample holder has been modified to provide a leak-tight vessel without the use of gaskets or other sealing means. The elimination of gaskets removes a large source of error in previous equipment used for making capillary pressure measurements.

The present invention will now be described by way of example in more detail with reference to the accompanying drawings, in which:

Fig. 1 is a typical capillary pressure plot with a portion of the curve enlarged;
Fig. 2 is the portion of the curve that is enlarged in Fig. 1 shown to a larger scale;
Fig. 3 is a block diagram of an apparatus suitable for performing the present invention.

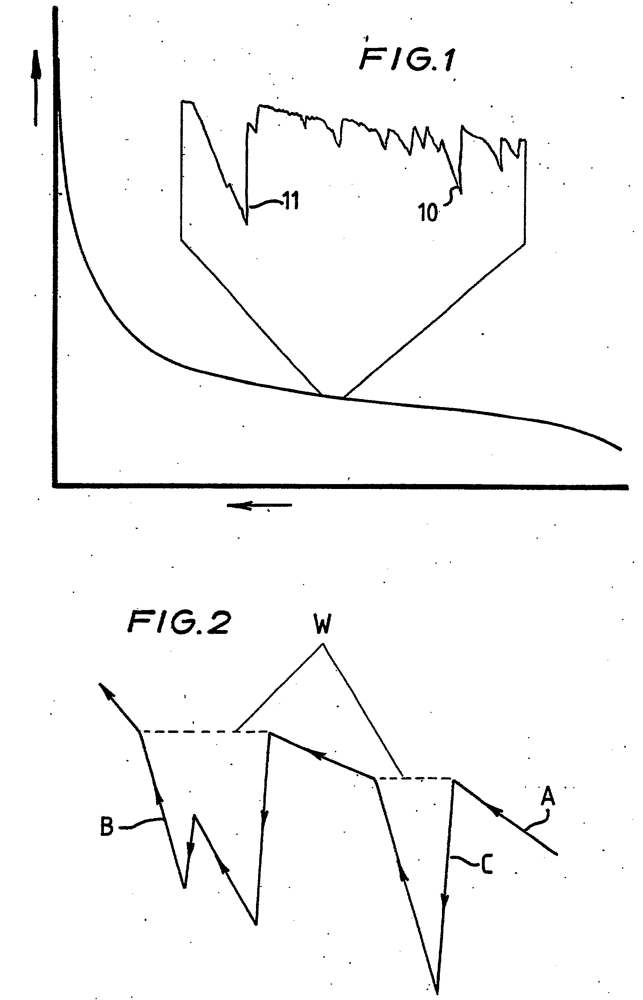

Referring now to Figs. 1 and 2, there is shown a mercury capillary pressure curve and a portion of the curve enlarged. In Fig. 1 the mercury saturation (horizontal axis) increases to the left while the mercury capillary pressure (vertical axis) increases in a "Y" direction. This is a typical curve from a formation rock, for example, of Berea sandstone and shows for low saturations, the pressure increases very slowly but with increasing mercury saturation the pressure increases rapidly. Also shown in Fig. 1 is an enlargement of a small portion of the curve showing the pressure drops 10 and 11. The pressure drops are the result of the mercury passing through the throat of a pore and flowing into the pore space. As the mercury flows into the pore space the pressure decreases rapidly until the pore starts to fill at which time, the pressure then increases at a steady rate to approximately its initial value before breaking through the throat of the pore. The enlarged portion of Fig. 1 is shown to an even larger scale in Fig. 2 where the various portions of the curve are labeled. In particular, the rising portion A of the capillary pressure curve to previously unattained levels is referred to a rison. On the other hand, the rising portion B of the capillary pressure curve to previously attained levels is referred to as a subison, while the decreasing pressure portion indicated by C of the curve is referred to as a rheon. The volume between the point at which the pressure initially decreases and the point at which it again achieves its original value is the volume of a subison pore system indicated by W. A subison pore system consists of only rheons and subisons. If the horizontal distance of each pore system were summed, one would obtain the volume of the pore system of the sample or more particularly the trapping pore volume. The trapping pore volume is the volume of the pore system that can hold hydrocarbons.

From the above description it can be seen that the trapped saturation of the non-wetting phase $S_{nwr}$ fluid after a waterflood can be predicted from the following equation:

$$S_{nwr} = \frac{V_{sT}}{V_p} \qquad (1)$$

where $V_{sT}$ = total subison pore system volume
and $V_p$ = total pore volume of sample.

The above relationship holds true for any strongly water-wet system which would be present after a waterflood type of recovery. In this type of system, the water present in the pores will be removed by the vacuum and thus the subison pore system volume that is measured by the method of the present invention will be result of the removal of the residual oil. One could also predict the residual saturation $S_r$ if one knows the initial saturation $S_I$ by summing the volume of all the given subison pore systems, that would be saturated at an initial saturation of $S_I$.

$$S_r = \Sigma \frac{S_v}{V_p} \qquad (2)$$

$$S \leq S_I$$

where $S_v$ = the volume of a single subison pore system
and $S_I$ = initial saturation.

Similarly the permeability K of the formation can be derived from the following expression:

$$k = 477 \; \phi \; \sum_{i}^{N_r} \; \frac{V_{ri}}{V_{rT}} \; \frac{1}{P_r^2} \tag{3}$$

where $\phi$ = porosity of the sample
$N_r$ = number of measured risons
$V_{ri}$ = volume of a given rison
$V_{rT}$ = total volume of risons
$P_r$ = entry pressure of rison

The model equations for the permeability are derived by recognizing that the distribution of risons governs the flow of fluid, i.e. permeability. Each rison can be considered as a capillary tube of a diameter equal to the entry diameter (which can be calculated from the entry pressure) and with a volume equal to the rison volume. Thus, the permeability can be determined from the distribution of risons represented as capillary tubes in parallel over a wide range of different diameters.

Likewise, the Archie's exponent m and the formation resistivity factor F can be calculated from the following equations:

$$m = \frac{1 + \log\,[V_{rT}/2\,V_p]}{\log\,\phi} \tag{4}$$

$$F = \frac{2}{\phi} \; \frac{V_p}{V_{rT}} \tag{5}$$

These equations for m and F are calculated, as with the permeability, from the risons represented as capillary tubes in parallel. The total conductivity is then the sum of the conductivities from each tube. The angular dependence disappears because each rison is assumed to have an isotropic contribution. Thus, the sum of the conductivities amounts by cancellation to just the total rison volume, $T_r$.

The average pore volume can be calculated from the following expression:

$$S_v = \frac{V_{sT}}{N_s} \tag{6}$$

where $N_s$ = number of subison pore systems.

All of the above data can be obtained from accurate measurements of the volumes and the pressures during a single capillary pressure measurement using the apparatus of this invention. For example, if the core is first evacuated and then mercury forced through the core until it is completely saturated to obtain a complete mercury capillary pressure curve, both the total pore volume as well as the volume of each subison will be obtained. The mercury may be injected into the core at any suitable rate, for example less than $10^{-5}$ cubic centimeters per second. The pressure is measured with an accuracy of better than 1 part in $10^4$, using a 16-bit analog-to-digital converter, while the volume is measured with an accuracy of 1 part in $10^6$ and the measured values converted to a digital quantity, the required calculations can be performed in a small computer or specialized processor. Since the measurements are in digital form, it will be a simple matter for the processor to detect a decrease in pressure indicating a rheon as shown in Fig. 2. The processor can sum the volume until the pressure again reaches the value it had at the time that it entered the pore space to determine the total volume of all the subisons. The remaining calculations can then be readily performed.

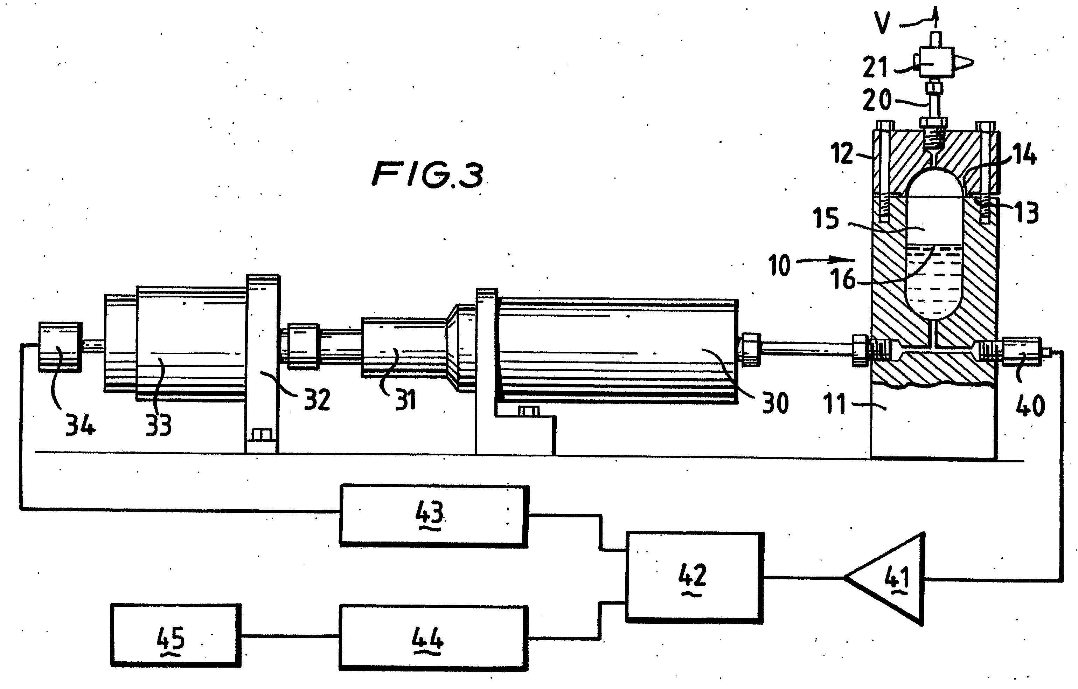

Referring to Fig. 3, there is shown an instrument suitable for carrying out the above measurements with the accuracy required. In particular, there is shown a sample holder 10 which is formed of two cup-shaped members 11 and 12. The mating surfaces 13 and 14 of the cup-shaped surfaces are ground and lapped so that they will form a fluid-tight seal without the addition of any sealing material or gaskets. The presence of gaskets or sealing material will produce faulty results since the voids in gaskets, such as O-rings, or sealing materials can contribute to the volume of the pore spaces that are being measured. In order to effect the seal between the two mating surfaces, the two units should be bolted together with the tension on the bolts being accurately measured as by means of torque wrenches or similar devices. The sample holder is provided with a line 20 and a valve 21 which is coupled to a source suitable vacuum (arrow V). This permits the sample holder and the core material to be completely evacuated before the measurements are started. Prior to evacuating the chamber and the core material the chamber should be filled to a level 16 with a fluid which is to be used to obtain the capillary pressure curve.

A pressure intensifier 30 is used for applying pressure to the fluid used in the capillary pressure measurements. The pressure intensifier is, for example, a positive displacement piston type, pump which is driven by actuating means 31. In an advantageous embodiment, the actuating means takes the rotary motion from the speed reducer 32 and converts it to linear motion for driving the piston of the pump unit. The speed reducer in turn is driven by a synchronous motor 33 whose rotation is determined by a shaft/encoder 34. The speed reducer should have a speed reduction of approximately 1000 to 1 when using the conventional 3600 rpm motor and the actuating means 31 should convert this rotary motion into a linear movement of the piston that provides a fluid displacement of approximately $1 \times 10^{-5} cm^3/s$ or less. The pressure in the sample holder is detected by a pressure transducer 40 having an accuracy of better than 1 part in $10^4$ with the signal being amplified by an amplifier 41 at least 1000 times. The amplified signal is supplied to a 16-bit analog-to-digital converter 42 which converts the analog signal to a related digital signal. The digital signal is supplied to both a data acquisition and processing unit 43 as well as to a digital-to-analog converter 44 whose signal is recorded on a chart recorder 45. In particular, the digital-to-analog converter 44 uses only the first 10 bits of the data word from the converter 42 for display on the chart recorder. In particular, the 10-bit signal is displayed full scale on the chart recorder and upon the occurrence of the 11th bit in the data word from the converter 42, the converter 44 resets the chart recorder to 0 so that it can again be used full scale for displaying the first 4 bits of the analog-to-digital converter 42. This, in effect, provides an accuracy of 1 in 65,000 for the data recorder on the recorder 45. The data acquisition processing unit 43 also receives data from the shaft encoder 34 and can make the calculations described above. In particular, the shaft encoder should provide an output signal related to the position of the motor shaft which when correlated with the volume supplied by the pressure intensifier 30 provides an overall accuracy of at least 1 part in $10^6$.

This system is operated in much the same manner as the system described in the patent referred to above. In particular, the sample holder is opened and the core material or other sample placed in the sample holder and the sample holder then assembled. The sample holder is partially filled with a displacing fluid, for example mercury, and then evacuated through line 20. After evacuation, the pressure on the mercury is increased by the intensifier 30 while the measurements are made. Once the measurements are obtained, the various characteristics of the core material described above can be readily computed.

Various modifications of the invention will become apparent to those skilled in the art from the foregoing description and accompanying drawings.

**Claims**

1. A method for determining characteristics of a porous body, comprising the steps of:
confining a portion of said body in a closed zone;
evacuating said zone and pore spaces of said body to a high vacuum;
admitting a fluid into said zone to a level above said body to completely immerse said body in said fluid and fill said zone with said fluid, characterized by the steps of:
continuously injecting additional fluid into said zone at a preselected rate;
substantially continuously noting pressure changes of said fluid in said zone and the volume of fluid injected into said zone;
determining subisons and risons from said noted pressure changes and injected volumes, and
determining said characteristics of said body from said determined subisons and risons.

2. The method as claimed in claim 1, wherein the said characteristic is the capillary pressure curve of the body.

3. The method as claimed in claim 1, wherein said characteristic is residual saturation, and further comprising:
measuring the total pore volume of said body.

4. The method as claimed in claim 1, wherein said characteristic is residual saturation, and further comprising:
determining the initial saturation of said body.

5. The method as claimed in claim 1, wherein said characteristic is permeability, further comprising:
measuring the entry pressure for each rison of said body.

6. The method as claimed in claim 1, wherein said characteristic is Archie's lithological exponent, m, for said body.

7. The method as claimed in claim 1, wherein said characteristic is the resistivity factor, F, of said body.

8. An apparatus for carrying out the method for determining characteristics of a porous body as claimed in any one of claims 1-7, comprising:
a sample holder (10) formed from two cup-shaped members (11, 12) detachably secured together to create a hollow holder for containing in said holder, said body, with the mating surfaces (13, 14) of said two cup-shaped members having surfaces to form a leak-tight seal therebetween;

a positive displacement pump (30) interconnected with said sample holder (10) for injecting a fluid into said holder (10);

a drive means (33) interconnected with said pump (30) to provide a preselected flow rate into said sample holder (10);

a first means (34) interconnected with said pump (30) for determining the volume of fluid injected into said holder (10) by said pump (30), characterized by:

a second means (40) interconnected with said sample holder (10), for measuring the pressure therein, and

a processing means (43, 44) for analyzing data from said first and second means to determine said characteristics.

9. The apparatus as claimed in claim 8, wherein said first means has an accuracy of at least 1 part in $10^6$.

10. The apparatus as claimed in claim 8, wherein said second means has an accuracy of at least 1 part in $10^4$.

11. The apparatus as claimed in claim 8, and further comprising:

recording means (45) for recording data from said first and second means.

12. The apparatus as claimed in claim 8, wherein said drive means operates to provide a flow rate less than about $1 \times 10^{-5}$ cubic centimetres per second.

**Patentansprüche**

1. Verfahren zum Bestimmen von Eigenschaften eines porösen Körpers, bei dem
- ein Teil des Körpers in einen geschlossenen Bereich eingeschlossen wird,
- dieser Bereich und Porenräume des Körpers auf ein hohes Vakuum evakuiert werden,
- der Bereich mit einem Fluid bis auf eine Höhe über dem Körper gefüllt wird, derart, daß der Körper völlig in das Fluid eingetaucht und der Bereich mit dem Fluid gefüllt ist, gekennzeichnet durch die Arbeitsschritte:
- kontinuierliches Einspritzen von zusätzlichem Fluid in den Bereich mit einer vorgewählten Rate,
- im wesentlichen kontinuierliches Aufzeichnen von Änderungen des Fluiddruckes in diesem Bereich und des in den Bereich eingespritzten Fluidvolumens,
- Ableiten von "Subisons" und "Risons" von den aufgezeichneten Druckänderungen und aufgezeichneten eingespritzten Volumen, und
- Bestimmen der genannten Eigenschaften des Körpers anhand der ermittelten "Subisons "und "Risons".

2. Verfahren nach Anspruch 1, bei dem die genannte Eigenschaft die Kapillardruck-Kurve des Körpers ist.

3. Verfahren nach Anspruch 1, bei dem die genannte Eigenschaft die Restsättigung ist, und das ferner umfaßt:
- das Messen des Gesamtporenvolumens des Körpers.

4. Verfahren nach Anspruch 1, bei dem die genannte Eigenschaft die Restsättigung ist, und das ferner umfaßt:
- das Bestimmen der Anfangssättigung des Körpers.

5. Verfahren nach Anspruch 1, bei dem die genannte Eigenschaft die Durchlässigkeit ist, und das ferner umfaßt:
- das Messen des Eintrittsdruckes für jedes "Rison" des Körpers.

6. Verfahren nach Anspruch 1, bei dem die genannte Eigenschaft der Archie'sche lithologische Exponent m für den Körper ist.

7. Verfahren nach Anspruch 1, bei dem die genannte Eigenschaft der spezifische Widerstandsfaktor F des Körpers ist.

8. Vorrichtung zur Durchführung des Verfahrens zum Bestimmen von Eigenschaften eines porösen Körpers nach einem der Ansprüche 1 bis 7, mit
- einer Probenaufnahme (10), die von zwei becherförmigen Bauteilen (11, 12) gebildet ist, welche lösbar so miteinander verbunden sind, daß eine hohle Aufnahme zum Halten des Körpers in der Aufnahme entsteht, wobei die Berührungsflächen (13, 14) der beiden becherförmigen Bauteile geschliffene Flächen aufweisen, die zwischen ihnen lecksicher abdichten,
- einer mit der Probenaufnahme (10) verbundenen Verdrängerpumpe (30) zum Einspritzen von Fluid in die Aufnahme (10),
- einer mit der Pumpe (30) verbundenen Antriebsvorrichtung (33) zum Erzeugen einer vorgewählten Strömungsrate in die Probenaufnahme (10),
- einer mit der Pumpe (30) verbundenen ersten Einrichtung (34) zum Bestimmen des Volumens des von der Pumpe (30) in die Aufnahme (10) eingespritzten Fluids, gekennzeichnet durch
- eine mit der Probenaufnahme (10) verbundene zweite Einrichtung (40) zum Messen des Druckes in ihr, und
- eine Verarbeitungseinrichtung (43, 44) zum Auswerten von Daten von der ersten und der zweiten Einrichtung für die Bestimmung der genannten Eigenschaften.

9. Vorrichtung nach Anspruch 8, bei der die erste Einrichtung eine Genauigkeit von wenigstens 1 Teil in $10^6$ hat.

10. Vorrichtung nach Anspruch 8, bei der die zweite Einrichtung eine Genauigkeit von wenigstens 1 Teil in $10^4$ hat.

11. Vorrichtung nach Anspruch 8, ferner mit
- einer Aufzeichnungsvorrichtung (45) zum Aufzeichnen von Daten von der ersten und der zweiten Einrichtung.

12. Vorrichtung nach Anspruch 8, bei der die Antriebsvorrichtung eine Strömungsrate kleiner als etwa $1 \times 10^{-5}$ Kubikzentimeter je Sekunde erzeugt.

## Revendications

1. Procédé pour déterminer les caractéristiques d'un corps poreux, comprenant les étapes qui consistent à:
enfermer une partie dudit corps dans une zone fermée;
faire un vide poussé dans ladite zone et les espaces poreux dudit corps;
admettre un fluide dans ladite zone jusqu'à un niveau situé au-dessus dudit corps pour immerger entièrement ledit corps dans ledit fluide et remplir ladite zone avec ledit fluide, caractérisé par les étapes qui consistent à:
injecter en continu un fluide supplémentaire dans ladite zone à un débit présélectionné;
noter, essentiellement en continu, les variations de pression dudit fluide dans ladite zone et le volume de fluide injecté dans ladite zone;
déterminer les subisons et les risons à partir desdites variations de pression et desdits volumes injectés notés; et
déterminer lesdites caractéristiques dudit corps à partir desdits subisons et risons déterminés.

2. Procédé selon la revendication 1, dans lequel ladite caractéristique est la courbe de pression capillaire du corps.

3. Procédé selon la revendication 1, dans lequel ladite caractéristique est la saturation résiduelle, et comprenant en outre l'étape qui consiste à:
mesurer le volume poreux total dudit corps.

4. Procédé selon la revendication 1, dans lequel ladite caractéristique est la saturation résiduelle et comprenant en outre l'étape qui consiste à:
déterminer la saturation initiale dudit corps.

5. Procédé selon la revendication 1, dans lequel ladite caractéristique est la perméabilité, comprenant en outre l'étape qui consiste à:
mesurer la pression d'entrée de chaque rison dudit corps.

6. Procédé selon la revendication 1, dans lequel ladite caractéristique est l'exposant lithologique d'Archie, m, dudit corps.

7. Procédé selon la revendication 1, dans lequel ladite caractéristique est le facteur de formation F dudit corps.

8. Appareil pour mettre en oeuvre le procédé de détermination des caractéristiques d'un corps poreux selon l'une quelconque des revendications 1-7, comprenant:
un porte-échantillon (10) formé de deux éléments (11, 12) en forme de coupe, fixés l'un à l'autre de façon détachable pour créer un porte-échantillon creux destiné à contenir ledit corps dans ledit porte-échantillon, les surfaces appariées (13, 14) desdits deux éléments en forme de coupe ayant des surfaces rodées pour former entre elles un joint étanche;
une pompe volumétrique (30) interconnectée avec ledit porte-échantillon (10) pour injecter un fluide dans ledit porte-échantillon (10);
un moyen d'entraînement (33) interconnecté avec ladite pompe (30) pour fournir un débit présélectionné dans ledit porte-échantillon (10);
un premier moyen (34) interconnecté avec ladite pompe (30) pour déterminer le volume de fluide injecté dans ledit porte-échantillon (10) par ladite pompe (30), caractérisé par:
un deuxième moyen (40) interconnecté avec ledit porte-échantillon (10), pour y mesurer la pression, et
un moyen de traitement (43, 44) pour analyser les données provenant desdits premier et deuxième moyens pour déterminer lesdites caractéristiques.

9. Appareil selon la revendication 8, dans lequel ledit premier moyen a une précision d'au moins 1 pour $10^6$.

10. Appareil selon la revendication 8, dans lequel ledit deuxième moyen a une précision d'au moins 1 pour $10^4$.

11. Appareil selon la revendication 8, comprenant en outre:
un moyen d'enregistrement (45) pour enregistrer les données provenant dudit premier moyen et dudit deuxième moyen.

12. Appareil selon la revendication 8, dans lequel ledit moyen d'entraînement fonctionne pour fournir un débit inférieur à environ $1 \times 10^{-5}$ cm³/s.

*FIG.1*

*FIG.2*

FIG.3

EP 0 201 118 B1